# DEMANDE DE BREVET EUROPEEN

(11) **EP 0 816 396 A1**
(43) Date de publication de la demande: **07.01.1998**
(21) Numéro de dépôt: 97401396.3
(22) Date de dépôt: 18.06.1997
(51) Int. Cl.: C08F 14/06

(54) **Procédé de préparation en suspension de polymères et copolymères du chlorure de vinyle**

(30) Priorité: 27.06.1996 FR 9608003
(71) Demandeur: ELF ATOCHEM S.A., 92800 Puteaux (FR)
(72) Inventeur: Espiard, Philippe, 60140 Liancourt (FR); Peres, Richard, 04600 Saint-Auban-Sur-Durance (FR)

(57) **Abrégé**

La présente invention a pour objet un procédé de préparation de polymères et copolymères à base de chlorure de vinyle par polymérisation en suspension d'une composition monomère à base de chlorure de vinyle en présence d'au moins un alcool polyvinylique oxydé.

## Description

La présente invention a pour objet un procédé de préparation de polymères et copolymères à base de chlorure de vinyle par polymérisation en suspension d'une composition monomère à base de chlorure de vinyle en présence d'au moins un alcool polyvinylique oxydé.

Elle a également pour objet les polymères et copolymères à base de chlorure de vinyle issus du procédé.

Par l'expression "composition monomère à base de chlorure de vinyle" ou, plus brièvement, "composition monomère" on désigne, dans la présente description, le chlorure de vinyle seul ou en mélange avec au moins un autre monomère copolymérisable . Ladite composition monomère contient au moins 50 % en poids de chlorure de vinyle. Les monomères copolymérisables sont ceux généralement employés dans les techniques classiques de copolymérisation du chlorure de vinyle. On peut citer les esters vinyliques des acides mono- et polycarboxyliques, tels que acétate, propionate, benzoate de vinyle ; les acides insaturé mono- et poly-carboxyliques, tels que acrylique, méthacrylique, maléique, fumarique, itaconique, ainsi que leurs esters aliphatiques, cycloaliphatiques, aromatiques, leurs amides, leurs nitriles ; les halogénures d'alkyle, de vinyle, de vinylidène; les alkylvinyléthers; les oléfines.

Par polymérisation en suspension, on entend une polymérisation en présence d'initiateur organosoluble d'au moins un monomère dispersé par des moyens mécaniques dans un milieu aqueux contenant au moins un agent de mise en suspension.

Généralement, les procédés industriels de préparation de polymères et copolymères à base de chlorure de vinyle par polymérisation en suspension sont des procédés discontinus qui consistent à mettre en oeuvre un mélange réactionnel comprenant de l'eau, une composition monomère, un agent de mise en suspension et au moins un initiateur de polymérisation organosoluble. Le mélange réactionnel, soumis à agitation, est chauffé sous pression autogène et maintenu à la température de polymérisation choisie. Après la chute de pression, la composition monomère non transformée est éliminée.

Cette façon de procéder entraîne un certain nombre d'inconvénients tels que, par exemple, la présence de grains de polymère de diamètre élevé (supérieur à 350 microns) ou encore un début de dégradation de la résine finale pouvant entraîner une coloration.

Ces inconvénients proviennent en partie des variations de certains paramètres réactionnels difficilement contrôlables notamment, de la concentration en oxygène dans le milieu réactionnel.

L'oxygène présent dans le milieu réactionnel provient, pour l'essentiel, de l'air se trouvant dans le réacteur de polymérisation, au moment du chargement.

Il est également présent sous forme dissoute dans des quantités qui peuvent varier dans une large mesure, dans la composition monomère, dans l'eau déminéralisée servant de milieu réactionnel et dans les solutions des divers additifs utilisés pendant la polymérisation en suspension.

Afin de remédier à ces variations de la teneur en oxygène, on a proposé d'effectuer une mise sous pression réduite du réacteur, avant la charge de la composition monomère, contenant l'eau et éventuellement les divers additifs utilisés lors de la réaction de la polymérisation en suspension.

Bien que cette façon de procéder présente une certaine efficacité pour ce qui concerne le dégazage de l'eau, la quantité réelle en oxygène présent à l'intérieur du réacteur de polymérisation peut varier dans une large mesure et reste par conséquent un paramètre difficile à contrôler.

Il est connu qu'une teneur élevée en oxygène présent dans le système de polymérisation conduit à des augmentations de la durée de la polymérisation et réduit la stabilité thermique des résines obtenues.

Il est connu également qu'une concentration trop faible en oxygène - inférieure à 10 ppm par rapport à la composition monomère dans la phase gazeuse- conduit à l'obtention de grains de diamètre élevé rédhibitoires pour certaines applications.

Par ailleurs, l'article de M. FABINI et al. dans Chem. Papers 47(1) 60-63 (1993) décrit l'utilisation d'un alcool polyvinylique, ayant un taux d'hydrolyse de 86 % et préalablement traité sous air ou oxygène, comme agent de mise en suspension dans la polymérisation du chlorure de vinyle. L'utilisation de cet alcool polyvinylique oxydé en combinaison ayant un taux d'hydrolyse de 71 % comme agent de mise en suspension, a également été décrit dans l'article de V. MACHO et al, Chem. Papers 49(2) 102-105 (1995). Ces auteurs concluent que cet alcool polyvinylique oxydé permet d'obtenir des particules de chlorure de vinyle de densité élevée et de faible porosité. Toutefois, ces auteurs ont constaté une non reproductibilité de la granulométrie rédhibitoire qu'ils attribuent à la mauvaise agitation du mélange réactionnel lors de la polymérisation.

Les alcools polyvinyliques commerciaux sont généralement obtenus par hydrolyse des polyacétates de vinyle. Cette hydrolyse est le plus souvent incomplète et il reste dans la molécule des motifs acétate. La proportion de ces groupes acétate non modifiés est exprimée par l'indice d'ester qui, par définition, est le nombre de milligrammes de potasse nécessaire pour saponifier complètement un gramme de produit.

les alcools polyvinyliques peuvent se classer en trois catégories principales, suivant leur indice d'ester (Encyclopedia of Polymer Science and Engineering, 2e édition, volume 17, page 167).
- les alcools polyvinyliques à base d'indice ester (inférieur à 30) correspondant à un taux d'hydrolyse supérieur à 98 % (produits totalement hydrolysés).
- les alcools polyvinyliques à indice d'ester moyen (de l'ordre de 100 à 150) correspondant à un taux d'hydrolyse de 86 à 92 %.
- les alcools polyvinyliques à indice d'ester (de l'ordre de 100 à 150) correspondant à un taux d'hydrolyse de 70 à 80 % (produits peu hydrolysés).

La demanderesse a maintenant découvert un procédé de préparation de polymères et copolymères à base de chlorure de vinyle par polymérisation d'une composition monomère à base de chlorure de vinyle dans un réacteur fermé, en présence de quantités variables d'oxygène. Ce procédé, qui offre l'avantage de ne pas présenter les inconvénients énoncés précédemment, est caractérisé en ce que l'on forme un milieu réactionnel comprenant de l'eau, une composition monomère, au moins un initiateur de polymérisation organosoluble, au moins un alcool polyvinylique oxydé et éventuellement au moins un agent de mise en suspension.

Est exclue de la présente invention, l'utilisation d'un polyacétate hydrolysé à 86 %, suivi d'un traitement en milieu oxydant, soit seul soit en combinaison binaire avec un polyacétate hydrolysé à 71 %.

Le milieu réactionnel, soumis sous agitation, est ensuite chauffé sous pression autogène et maintenu à la température de polymérisation choisie. Après la chute de pression, la composition monomère non réagie est éliminée et le polymère sous forme de poudre est séparé du milieu réactionnel.

L'alcool polyvinylique oxydé peut être obtenu par traitement thermique en milieu oxydant, tel que sous air ou oxygène, d'un alcool polyvinylique issu de l'hydrolyse des polyacétates de vinyle. On utilise de préférence un alcool polyvinylique ayant un taux d'hydrolyse inférieur à 86 % et plus particulièrement un taux d'hydrolyse compris entre 60 et 80 %. On peut utiliser un ou plusieurs alcool(s) polyvinylique(s) oxydés.

Le traitement thermique en milieu oxydant consiste en général à chauffer l'alcool polyvinylique à une température comprise entre 100° C et 220° C et de préférence comprise entre 120° C et 180° C dans une atmosphère d'oxygène ou d'air et de préférence sous air. La durée du traitement est en général comprise entre 1 minute et 4 heures et de préférence comprise entre 1 heure et 3 heures.

La quantité totale d'alcool(s) polyvinylique(s) oxydé(s) utilisé(s) est en général comprise entre 0,001 % et 0,5 % en poids par rapport à la composition monomère mise en oeuvre et de préférence comprise entre 0,01 % et 0,2 %.

Les ou l'alcool(s) polyvinylique(s) oxydé(s) peut ou peuvent être utilisés aussi bien sous forme solide que liquide. La forme solide est particulièrement préférée. Il(s) est ou sont en général introduit(s) dans le réacteur avant le début de la polymérisation et le plus souvent introduit(s) avant la composition monomère.

Les initiateurs de polymérisation organosolubles peuvent être ceux habituellement utilisés dans la polymérisation en suspension du chlorure de vinyle, tels que des peroxydes organiques comme le peroxyde de lauroyle, le peroxyde de benzoyle, le peroxyde d'acétylcyclohexanesulfonyle, le peroxyde d'isobutyroyle, le peroxyde de dichloracétyle, le peroxyde de trichloracétyle, des peroxydicarbonates comme le peroxydicarbonate d'éthyle, le peroxydicarbonate d'éthyle hexyle, le peroxydicarbonate d'isopropyle, le peroxydicarbonate d'isobutyle, le peroxydicarbonate de dicétyle ; le perméthoxyacétate de tertiobutyle ; le peréthoxyacétate de tertiobutyle ; le perphénoxy-2- propionate de tertiobutyle, les hydroperoxydes tels que l'hydroperoxyde de cumène, l'hydroperoxyde de tertiobutyle ; les composés azoïques tel que l'a,a'-azobisisobutyronitrile. On utilise généralement 0,001 à 3 % en poids par rapport à la totalité de la composition monomère mise en oeuvre, de l'initiateur ou des initiateurs et de préférence 0,01 % à 1 % en poids.

La quantité d'eau mise en oeuvre selon le procédé de l'invention est telle que la teneur initiale en composition monomère du milieu réactionnel est généralement comprise entre 10 % et 90 % en poids et de préférence comprise entre 20 % et 70 % en poids.

Les agents de mise en suspension peuvent être ceux habituellement utilisés dans la polymérisation du chlorure de vinyle, tels que, par exemple, le polyacétate de vinyle totalement ou partiellement hydrolysé, les hydroxyalkylcelluloses, tels que l'hydroxyméthylcellulose, l'hydroxyéthylcellulose, l'hydroxypropylméthylcellulose, les méthylcelluloses, les carboxycelluloses, les gélatines et les gommes ainsi que leurs combinaisons. On utilise de préférence le polyacétate de vinyle totalement ou partiellement hydrolysé, ainsi que leurs combinaisons.

Ils sont employés en quantité généralement comprise entre 0,001 % et 0,5 % en poids par rapport à la composition monomère mise en oeuvre et de préférence entre 0,04 % et 0,3 %.

Ce procédé s'applique tout particulièrement à la préparation de polychlorure de vinyle à partir d'une composition monomère constituée essentiellement de chlorure de vinyle.

La température de polymérisation est en général comprise entre 25° C et 120° C et de préférence comprise entre 40° C et 100° C. On peut faire varier la température de polymérisation pendant la réaction.

L'agitation du milieu réactionnel est obtenue au moyen d'un mobile d'agitation tournantà une vitesse telle que la composition monomère soit dispersée selon une distribution voulue dans le milieu réactionnel.

Après la chute de pression, la réaction est arrêtée et la composition monomère non transformée est éliminée, notamment par dégazage.

Les polymères et copolymères à base de chlorure de vinyle objet de l'invention, préparés par la technique de polymérisation en suspension peuvent être séparés du milieu de polymérisation par tous procédés connus tels que filtration, essorage, décantation centrifuge, puis soumis à une opération de séchage suivie généralement d'une opération de tamisage destinée à isoler le produit (noble) défini comme passant à travers un tamis d'ouverture de mailles de 250 microns.

Les polymères et copolymères à base de chlorure de vinyle obtenus selon le procédé de l'invention présentent l'avantage de posséder une coloration améliorée et une granulométrie régulière de la résine finale.

Les polymères et copolymères à base de chlorure de vinyle selon la présente invention sont notamment applicables à la fabrication de feuilles, films, fils et articles moulés par calandrage.

Les exemples suivants illustrent l'invention.

Dans ce qui suit et sauf indication contraire, on désigne :
- par APVI 60, un polyacétate de vinyle ayant un taux d'hydrolyse inférieur à
   60 %.
- APV 88, un polyacétate de vinyle hydrolysé à 88 %.
- APV 71, un polyacétate de vinyle hydrolysé à 71 %.
- APV 72, un polyacétate de vinyle hydrolysé à 72 % dont la densité optique mesurée à 275 nm en absorption UV est le double de celle d'APV71.

Les caractéristiques des polyacétates de vinyle partiellement hydrolysés avant et après traitement thermique sont consignées dans le Tableau 1.

**Tableau 1**

| **Référence** | **Traitement thermique °C** | **Durée Heures** | **Mw** | **Mn** | **Ip = Mw/Mn** | **275 nm** | **315 nm** |
|---|---|---|---|---|---|---|---|
| APV 88 | --- | --- | 339900 | 140600 | 2,4 | 0,028 | 0,012 |
| APV 88 | 180 | 0,5 | 371500 | 130200 | 2,85 | 0,098 | 0,066 |
| APV 88 | 180 | 2 | 369000 | 90000 | 4,05 | 0,36 | 0,22 |
| APV 71 | --- | --- | 89600 | 34900 | 2,55 | 0,53 | 0,36 |
| APV 71 | 130 | 2 | 97800 | 35500 | 2,75 | 1,15 | 0,94 |
| APV 72 | --- | --- | 85200 | 28900 | 2,95 | 1,11 | 0,51 |
| APV 72 | 130 | 2 | 112400 | 34600 | 3,25 | 1,21 | 0,98 |
| Mw : masse molaire en poids mesurée par GPC | | | | | | | |
| Mn : masse molaire en nombre mesurée par GPC | | | | | | | |
| Ip : le rapport de Mw / Mn | | | | | | | |
| 275 nm et 315 nm = densité optique mesurée en absorption UV 275 et 315 nm sur des solutions aqueuses à 0,2 % en poids d'APV et caractéristiques des enchaînements -(C = C)ₙ - C = O | | | | | | | |

### Exemple1(comparatif)

Dans un réacteur vertical en acier oxydable de 28 litres de capacité, muni d'un agitateur du type "Pfaudler", on introduit 11,2 kg d'eau, 3,36 g de peroxydicarbonate de cétyle, 1,57 g d'acide citrique, 2,24 g de polyacétate hydrolysé à un taux inférieur à 60 % et 5,04 g de polyacétate de vinyle hydrolysé à 71 %. Après fermeture du réacteur et réglage de la vitesse d'agitation à 330 tr/mn, et mise en température à 30° C, on met le réacteur sous pression réduite de façon à atteindre une pression interne de 1,33.10⁴ Pa, que l'on maintient environ 30 minutes. Ensuite, on introduit 5,6 kg de chlorure de vinyle. La température du milieu est portée de 30° C à 53° C en trente minutes.

Lorsqu'on observe une baisse de pression interne du réacteur de 10⁵ Pa, la polymérisation est considérée comme terminée et le chlorure de vinyle non réagi est éliminé par dégazage sous pression réduite pendant une heure. Le réacteur est ensuite remis à l'air ambiant, et le produit obtenu se trouve sous forme d'une suspension de grains de polychlorure de vinyle dans l'eau. Le polychlorure de vinyle ainsi obtenu, est séparé du milieu de polymérisation par essorage, puis séché.

On opère comme précédemment, sauf que la pression interne est maintenue à 5,32 x 10³ Pa pendant 30 minutes avant l'introduction du chlorure de vinyle.

### Exemple 2 comparatif

On opère comme décrit à l'exemple 1 sauf que l'on introduit 2,52 g de polyacétate hydrolysé à 88 % et 2,52 g de polyacétate hydrolysé à 71 % à la place de 5,04 g de polyacétate hydrolysé à 71 %.

### Exemple 3

On opère comme décrit à l'exemple 2 sauf que le polyacétate hydrolysé à 71 % a été traité sous air à 130° C pendant 3 heures.

### Exemple 4 comparatif

On opère comme décrit à l'exemple 2 sauf que l'on utilise le polyacétate hydrolysé à 72 % à la place de celui hydrolysé à 71 %.

### Exemple 5

On opère comme décrit à l'exemple 4 sauf que le polyacétate hydrolysé à 72 % a été traité sous air à 130° C pendant 2 heures.

### Exemple 6

On opère comme décrit à l'exemple 4 sauf que le polyacétate hydrolysé à 88 % a été traité sous air à 180° C pendant 2 heures.

### Exemple 7

On opère comme décrit à l'exemple 1 sauf que l'on utilise le polyacétate de vinyle hydrolysé à 72 %, soumis à un traitement à 130° C sous air pendant 2 heures, à la place de APV 71.

### Exemple 8

On opère comme décrit à l'exemple 7 sauf que l'on utilise 2,52 g de APV 88 à la place de 2,24 g de APVI 60.

Les caractéristiques de grains de polychlorure de vinyle obtenus suivant les exemples 1 à 8 sont reportées dans le Tableau 2.

La prise de plastifiant est le pourcentage massique de plastifiant (dioctylphtalate) absorbé par le polymère à froid lorsqu'ils sont soumis à une vitesse de centrifugation de 3750 tours par heure.

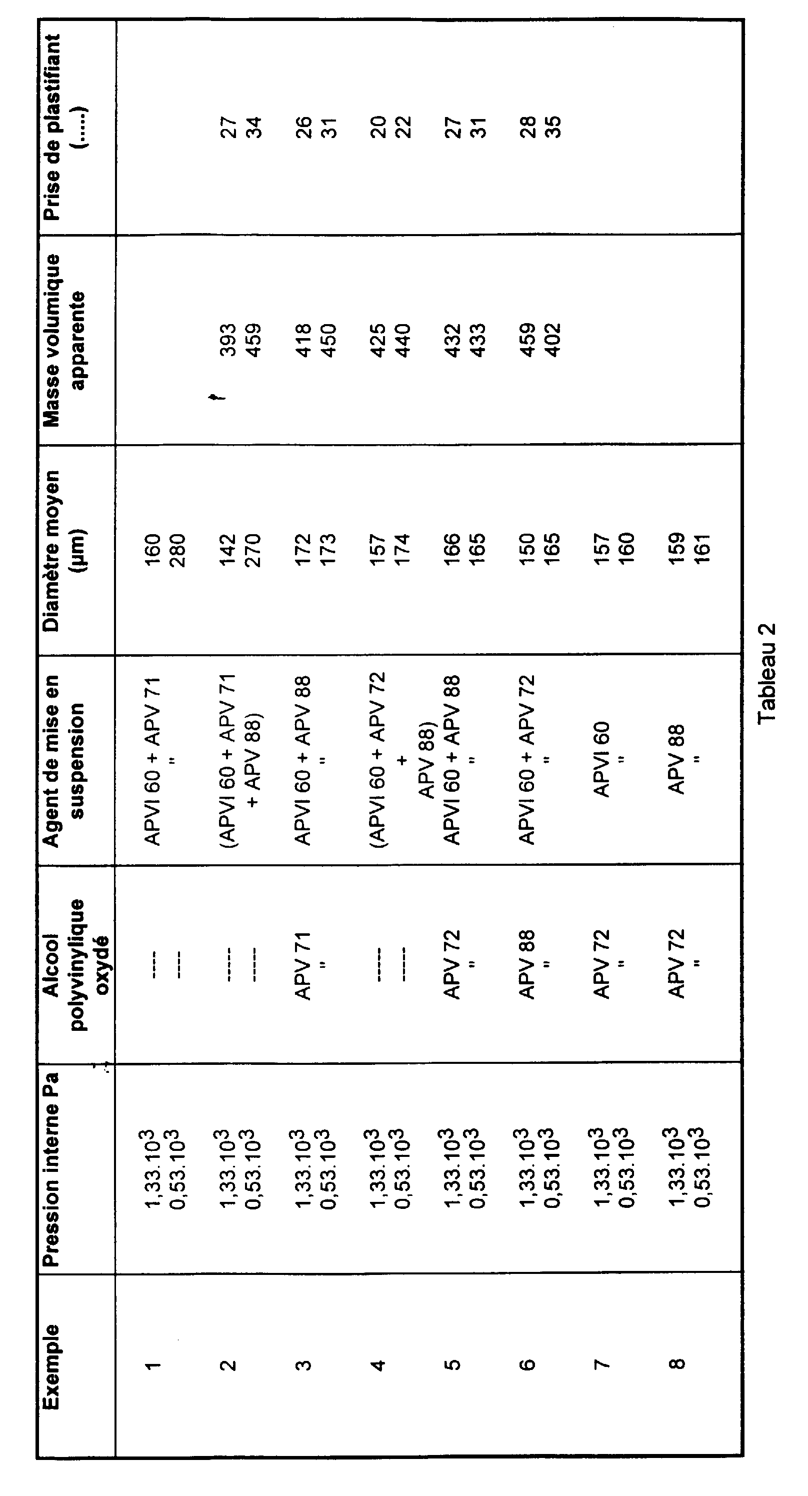

## Revendications

1. Procédé de préparation de polymères et copolymères à base de chlorure de vinyle par polymérisation en suspension d'une composition monomère à base de chlorure de vinyle dans un réacteur fermé, en présence de quantités variables d'oxygène caractérisé en ce que l'on forme un milieu réactionnel comprenant de l'eau, une composition monomère, au moins un initiateur de polymérisation organosoluble, au moins un alcool polyvinylique oxydé et éventuellement au moins un agent de mise en suspension.

2. Procédé selon la revendication 1 caractérisé en ce que l'alcool polyvinylique oxydé est obtenu par traitement thermique en milieu oxydant d'un alcool polyvinylique issu de l'hydrolyse des polyacétates de vinyle.

3. Procédé selon l'une quelconque des revendications 1 à 2 caractérisé en ce que la quantité totale d'alcool polyvinylique oxydé utlisée est comprise entre 0,01 et 0,2 % par rapport au poids de la composition monomère.

4. Procédé selon l'une quelconque des revendications 1 à 3 caractérisé en ce que l'agent de mis en suspension est un polyacétate de vinyle partiellement ou complètement hydrolysé ou leur combinaisons.

5. Procédé selon l'une quelconque des revendications 1 à 4 caractérisé en ce que l'initiateur de polymérisation organosoluble est le peroxydicarbonate de cétyle.

6. Procédé selon l'une quelconque des revendications 1 à 5 caractérisé en ce que la composition monomère est constituée essentiellement de chlorure de vinyle.

7. Polymères et copolymères à base de chlorure de vinyle susceptibles d'être obtenus selon l'une quelconque des revendications 1 à 6.
